# FASCICULE DE BREVET EUROPEEN

(11) **EP 3 216 687 B1**
(45) Date de publication et mention de la délivrance du brevet: **06.03.2019**
(21) Numéro de dépôt: 16159182.1
(22) Date de dépôt: 08.03.2016
(51) Int. Cl.: B62M 6/90, B62M 6/40, B62H 5/00

(54) **BICYCLETTE ÉLECTRIQUE ET PROCÉDÉ D'ALIMENTATION ÉLECTRIQUE DE SON MOTEUR ÉLECTRIQUE**
ELEKTROBIKE UND STROMZUFÜHRUNGSVERFAHREN FÜR SEINEN ELEKTROMOTOR
ELECTRIC BICYCLE AND METHOD FOR SUPPLYING POWER TO THE ELECTRIC MOTOR THEREOF

(43) Date de publication de la demande: 13.09.2017
(73) Titulaire: intermobility SA, 2503 Bienne (CH)
(72) Inventeur: KUONEN, François, 2503 Bienne (CH)
(74) Mandataire: BOVARD AG

(56) Documents cités:
- EP-A1- 2 386 474
- EP-A1- 2 781 446
- DE-A1- 19 711 798
- JP-A- H09 226 664
- US-A1- 2008 156 564
- Stuart Deutsch: "Makita 18V LXT Cordless... Folding Bicycle", , 9 mai 2014 (2014-05-09), XP055299980, Extrait de l'Internet: URL:http://toolguyd.com/makita-18v-lxt-cor dless-folding-bicycle/ [extrait le 2016-09-05]
- Pro Trade Mags: "Makita Electric Bike challenge", , 6 septembre 2013 (2013-09-06), page 1, XP054976766, Extrait de l'Internet: URL:https://www.youtube.com/watch?v=K1_6V9 3JYkE [extrait le 2016-09-06]
- Not Indicated: "Test e Bike - Elektrofahrrad - elektrofahrrad-test24.de", , 25 août 2015 (2015-08-25), XP055299984, Extrait de l'Internet: URL:http://elektrofahrrad-test24.de/test-e -bike-elektrofahrrad/ [extrait le 2016-09-05]

## Description

### Domaine technique de l'invention

La présente invention concerne une bicyclette électrique et un procédé d'alimentation du moteur électrique de cette bicyclette électrique.

### État de la technique

De manière connue, une bicyclette peut être équipée d'un moteur électrique afin de pouvoir être entraînée par ce moteur et/ ou par la force physique de son utilisateur. Lorsque tel est le cas, une batterie d'alimentation du moteur électrique est prévue.

Dans certains cas, la batterie d'alimentation du moteur électrique d'entraînement de la bicyclette est amovible afin de pouvoir être rechargée après avoir été retirée de la bicyclette et connectée à un socle de recharge distinct de cette bicyclette.

Généralement, on veut que la bicyclette possède une autonomie telle qu'elle peut être entraînée électriquement sur une assez longue distance avec une seule recharge complète de la batterie. De ce fait, la batterie d'alimentation du moteur électrique d'entraînement de la bicyclette possède normalement une capacité de stockage importante. Une telle batterie est lourde et assez encombrante si bien que son retrait de la bicyclette, puis son transport jusqu'au lieu de rechargement, puis son transport dans le sens inverse, puis sa remise en place sur la bicyclette constituent des opérations fastidieuses.

EP 2 386 474 A1, qui est considéré comme l'état de l'art le plus proche de l'objet des revendications 1 et 13, propose une bicyclette électrique possédant un boîtier de réception de deux batteries identiques, qui sont amovibles. Lorsqu'elles équipent la bicyclette électrique, ces deux batteries peuvent alimenter en même temps l'entraînement électrique de la bicyclette, en étant connectées soit en parallèle, soit en série. Lorsque seulement une batterie est installée, la bicyclette est plus légère.

Comme EP 2 386 474 A1, JP H09 226664 A a trait à une bicyclette à assistance électrique qui peut être équipée de deux batteries en même temps, ou bien d'une seule de ces deux batteries. Ces deux batteries sont identiques afin de faire faire des économies à l'utilisateur.

Dans EP 2 781 446 A1, des cycles appartiennent à un système automatique de stockage de cycles. Chacun d'eux peut être alimenté par une batterie, laquelle est amovible de manière que chaque utilisateur peut utiliser sa propre batterie.

### Résumé de l'invention

L'invention a au moins pour but de permettre qu'une bicyclette électrique soit plus facile à approvisionner en énergie électrique, sans perdre en autonomie.

Selon l'invention, ce but est atteint grâce à une bicyclette électrique. Cette bicyclette électrique comprend un moteur électrique d'entraînement de la bicyclette électrique, une première batterie amovible d'alimentation du moteur électrique, et au moins une deuxième batterie amovible d'alimentation du moteur électrique. Cette deuxième batterie amovible a une capacité de stockage d'énergie moindre que la première batterie amovible. La première et la deuxième batterie amovibles peuvent équiper en même temps la bicyclette électrique de manière à être l'une et l'autre connectées électriquement à la bicyclette électrique et à pouvoir l'une et l'autre alimenter le moteur électrique. La bicyclette électrique comprend en outre un dispositif de commutation à même d'effectuer une commutation entre un état où le moteur électrique est alimenté par la première batterie amovible et un état où le moteur électrique est alimenté par la deuxième batterie amovible. La bicyclette électrique comprend en outre un dispositif électronique de pilotage de l'alimentation électrique du moteur électrique. Ce dispositif électronique de pilotage est configuré pour vérifier régulièrement la possibilité d'alimenter le moteur électrique à partir de la deuxième batterie amovible et pour commander que le moteur électrique soit alimenté prioritairement par la deuxième batterie amovible dès lors que cette deuxième batterie amovible est connectée électriquement à la bicyclette électrique et présente un état de charge supérieur à un seuil prédéterminé.

La deuxième batterie amovible peut être bien moins lourde et encombrante que la première batterie amovible. En particulier, elle peut être suffisamment légère et peu volumineuse pour que, sans en être trop dérangé, on puisse la transporter avec soi, voire même sur soi, par exemple dans une poche, ou dans un sac à main, ou bien dans une seule main. Il est dès lors possible dans la pratique d'enlever la deuxième batterie amovible de la bicyclette électrique, d'emporter cette deuxième batterie amovible et de la mettre en charge après chaque ou presque chaque utilisation de la bicyclette électrique. La deuxième batterie amovible peut être plutôt utilisée sur les petits trajets.

Grâce à la première batterie amovible, la bicyclette électrique peut posséder une autonomie importante et être entraînée électriquement sur une assez longue distance avec une seule recharge complète de cette première batterie amovible. La première batterie amovible peut être utilisée prioritairement sur les grands trajets. Dès lors que la deuxième batterie amovible est utilisée souvent, par exemple sur tous les petits trajets ou sur la plupart des petits trajets, la première batterie amovible est peu utilisée et elle ne doit que rarement être mise en charge.

Grâce au dispositif électronique de pilotage, le moteur électrique est alimenté prioritairement par la deuxième batterie amovible dès lors que cette deuxième batterie amovible est connectée électriquement à la bicyclette électrique et présente un état de charge supérieur à un seuil prédéterminé. Du fait de ce fonctionnement, la deuxième batterie est utilisée souvent, tandis que la première batterie est peu utilisée et ne doit que rarement être rechargée.

Dans ce cas, l'approvisionnement en électricité de la bicyclette électrique est obtenu moyennant de rares recharges de la première batterie amovible et des recharges plus fréquentes de la deuxième batterie amovible alors que la recharge régulière de cette deuxième batterie amovible est particulièrement aisée. De plus, la rareté des recharges de la première batterie amovible épargne cette première batterie amovible, dont la durée de vie est augmentée.

Par exemple, chaque bicyclette électrique d'un parc de bicyclettes électriques en libre-service peut être conforme à l'invention, auquel cas plusieurs exemplaires de la deuxième batterie amovible peuvent être remis à différents utilisateurs de ces bicyclettes électriques en libre-service. Chaque utilisateur est en possession d'au moins un exemplaire de la deuxième batterie amovible, qu'il met lui-même régulièrement en charge, par exemple chez lui, et qu'il ne laisse en place sur une bicyclette électrique que tant qu'il utilise cette bicyclette électrique. Un exploitant gérant le parc de bicyclettes électriques peut s'occuper de la recharge des exemplaires de la première batterie amovible qui sont prévus pour équiper les bicyclettes électriques.

La bicyclette électrique définie ci-dessus peut incorporer une ou plusieurs autres caractéristiques avantageuses, isolément ou en combinaison, en particulier parmi celles précisées ci-après.

Avantageusement, la bicyclette électrique comporte un dispositif de verrouillage embarqué à même d'occuper au moins deux états, à savoir un état verrouillé dans lequel une utilisation de la bicyclette électrique est empêchée et un état déverrouillé dans lequel une utilisation de la bicyclette électrique est possible, ce dispositif de verrouillage embarqué comportant un dispositif électronique de contrôle et de commande à même au moins de commander de passer de l'état verrouillé à l'état déverrouillé.

Avantageusement, la bicyclette électrique comporte une liaison permettant une communication entre le dispositif électronique de pilotage de l'alimentation électrique du moteur électrique et le dispositif électronique de contrôle et de commande constitutif du dispositif de verrouillage embarqué.

Avantageusement, le dispositif électronique de pilotage de l'alimentation électrique du moteur est configuré pour n'alimenter le moteur électrique que si au moins une condition est remplie, cette condition étant que le dispositif électronique de contrôle et de commande indique que le dispositif de verrouillage embarqué n'empêche pas une utilisation de la bicyclette électrique.

Avantageusement, ladite condition est une première condition, le dispositif électronique de pilotage de l'alimentation électrique du moteur électrique étant configuré pour n'alimenter le moteur électrique que si la première condition et au moins l'une de deuxième et troisième conditions sont remplies en même temps, la deuxième condition étant que la deuxième batterie amovible est connectée électriquement à la bicyclette électrique, la troisième condition étant qu'un utilisateur a communiqué l'ordre d'alimenter le moteur électrique à partir de la première batterie amovible.

Avantageusement, la bicyclette électrique comporte un émetteur-récepteur à même d'établir une communication sans fil avec l'extérieur, ainsi qu'une liaison permettant une communication entre cet émetteur-récepteur et le dispositif électronique de contrôle et de commande constitutif du dispositif de verrouillage embarqué.

Avantageusement, la bicyclette électrique comprend un premier connecteur électrique de connexion de la première batterie amovible et un deuxième connecteur électrique de connexion de la deuxième batterie amovible, ces premier et deuxième connecteurs électriques étant raccordés électriquement au dispositif de commutation.

Avantageusement, la bicyclette électrique comprend un premier et un deuxième dispositif de retenue d'une batterie amovible, le premier dispositif de retenue étant à même d'accueillir et de retenir la première batterie amovible de manière que cette première batterie amovible soit connectée électriquement à la bicyclette électrique tout en étant amovible, le deuxième dispositif de retenue étant à même d'accueillir et de retenir la deuxième batterie amovible de manière que cette deuxième batterie amovible soit connectée électriquement à la bicyclette électrique tout en étant amovible.

Avantageusement, la bicyclette électrique comprend un dispositif antivol prévu pour verrouiller la première batterie dans le premier dispositif de retenue, ce dispositif antivol nécessitant une clé pour être déverrouillé de manière à permettre que la première batterie amovible soit retirée de la bicyclette électrique.

Avantageusement, le premier dispositif de retenue est à même d'accueillir et de retenir une batterie plus volumineuse que le deuxième dispositif de retenue.

Avantageusement, la bicyclette électrique est dépourvue de moyens permettant le raccordement électrique de l'une au moins des première et deuxième batteries amovibles à une source extérieure d'énergie électrique lorsque ces première et deuxième batteries sont connectées électriquement à la bicyclette électrique.

Parmi les revendications annexées, la revendication 13 définit un procédé d'alimentation électrique du moteur électrique d'une bicyclette électrique. Toujours parmi les revendications annexées, la revendication 14 définit des caractéristiques que peut avantageusement incorporer ce procédé d'alimentation électrique.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue schématique et simplifiée, en perspective, d'une bicyclette électrique selon un mode de réalisation de l'invention,
- la figure 2 est une vue schématique et simplifiée, de côté, d'un sous-ensemble de la bicyclette électrique représentée à la figure 1, et
- la figure 3 est une vue schématique et simplifiée, en perspective, qui représente le même sous-ensemble que la figure 2.

### Description d'un mode préférentiel de l'invention

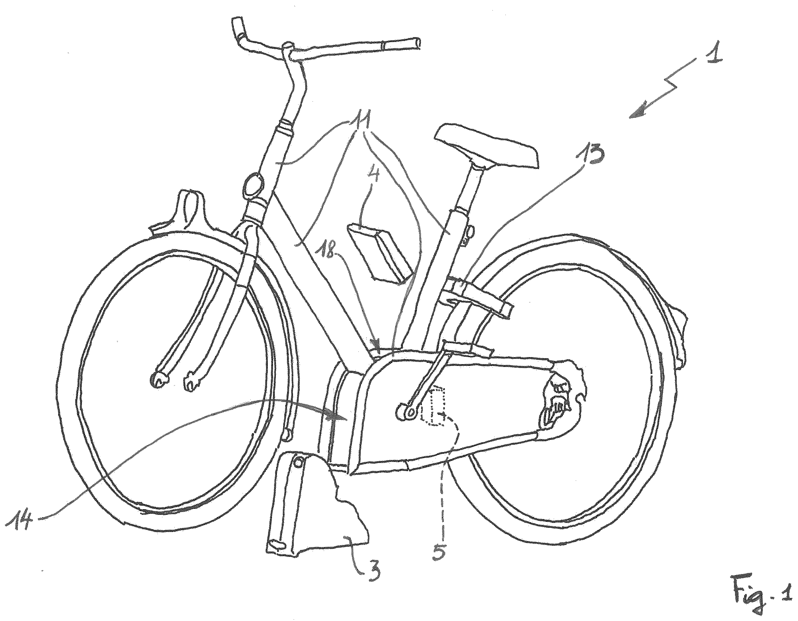

Une bicyclette électrique 1 selon un mode de réalisation de l'invention est représentée sur la figure 1. Elle peut être entraînée par la force physique d'un utilisateur et/ou de manière électrique.

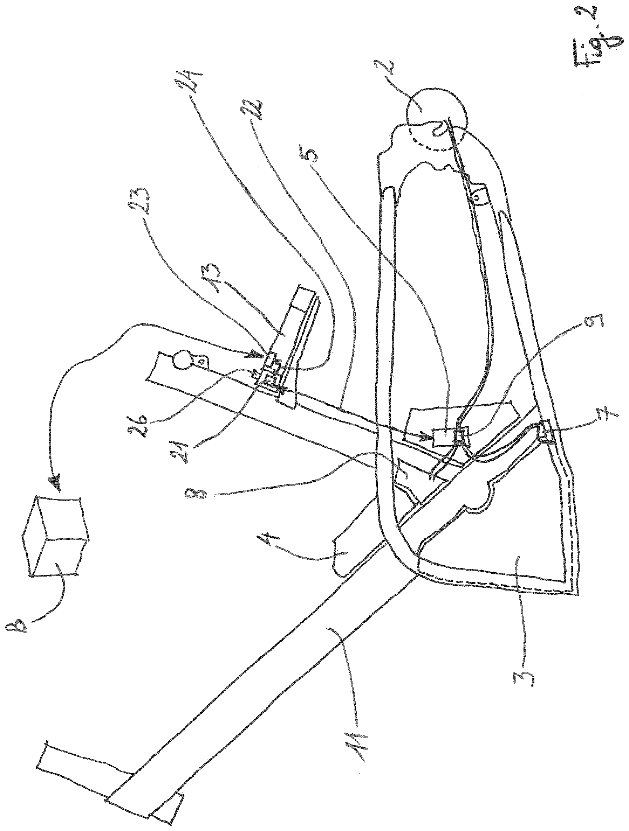

Dans un souci de clarté, la bicyclette électrique 1 est incomplète sur la figure 2. Ainsi que l'on peut le voir sur cette figure 2, un entraînement électrique de la bicyclette électrique 1 comporte un moteur électrique 2, une première batterie amovible 3, une deuxième batterie amovible 4 et un dispositif électronique 5 de pilotage de l'alimentation électrique du moteur électrique 2, dont le rotor est accouplé à une roue de la bicyclette électrique 1, par exemple à sa roue arrière comme dans le mode de réalisation représenté. Dans ce mode de réalisation, le dispositif électronique de pilotage 5 comporte un microcontrôleur.

Un premier connecteur électrique 7 et un deuxième connecteur électrique 8 sont l'un et l'autre raccordés électriquement à un dispositif de commutation 9 faisant partie du dispositif électronique de pilotage 5. Le premier connecteur électrique 7 est complémentaire d'un connecteur électrique de la première batterie amovible 3, qu'il permet de connecter électriquement à l'entraînement électrique de la bicyclette électrique 1. Le deuxième connecteur électrique 8 est complémentaire d'un connecteur électrique de la deuxième batterie amovible 4, qu'il permet de connecter électriquement à l'entraînement électrique de la bicyclette électrique 1. Le dispositif de commutation 9 est à même d'effectuer une commutation entre un état où le moteur électrique 2 est alimenté par la première batterie 3 et un état où le moteur électrique 2 est alimenté par la deuxième batterie 4. Le dispositif de commutation 9 est également à même de déconnecter à la fois le premier connecteur électrique 7 et le deuxième connecteur électrique 8 du moteur électrique 2, c'est-à-dire d'empêcher une alimentation électrique de ce moteur électrique 2.

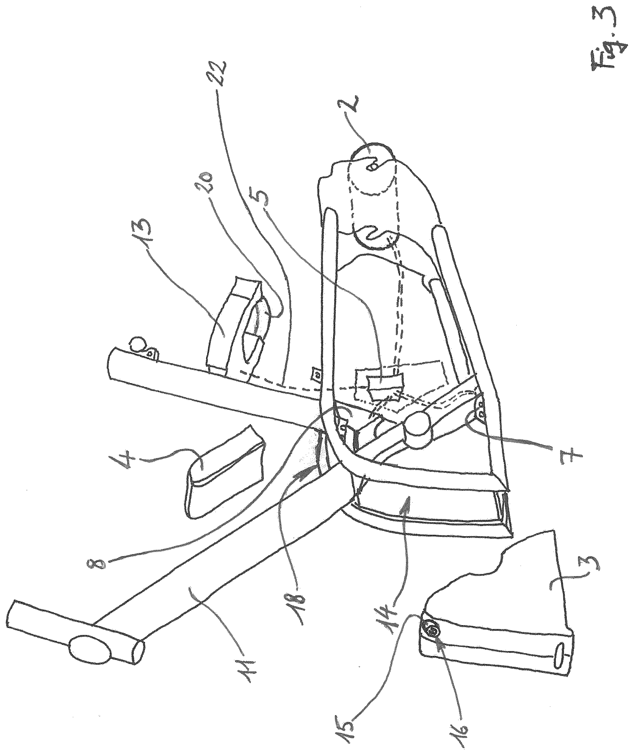

Dans un souci de clarté, la bicyclette électrique 1 est incomplète sur la figure 3. Parmi les constituants représentés sur cette figure 3, il y a le cadre 11 de la bicyclette électrique 1. Ce cadre 11 porte le dispositif électronique de pilotage 5, le premier connecteur électrique 7, le deuxième connecteur électrique 8, ainsi qu'un dispositif de verrouillage embarqué 13.

Le cadre 11 délimite un logement 14 pour la première batterie amovible 3. Ce logement 14 fait partie d'un premier dispositif de retenue qui comprend également un dispositif antivol. Une partie 15 de ce dispositif antivol équipe la première batterie amovible 3 et comporte une serrure 16. Le dispositif antivol peut verrouiller la première batterie 3 dans le premier dispositif de retenue. Pour permettre que la première batterie amovible 3 soit retirée de la bicyclette électrique 1, le dispositif antivol doit être déverrouillé moyennant un actionnement de la serrure 16 par une clé non représentée. Le premier dispositif de retenue susmentionné est à même d'accueillir et de retenir la première batterie amovible 3 de manière que cette première batterie amovible 3 soit connectée électriquement au premier connecteur électrique 7.

Le cadre 11 et un socle du deuxième connecteur électrique 8 délimitent ensemble un logement 18 pour la deuxième batterie amovible 4. Du fait de son inclinaison, ce logement 18 forme un dispositif de retenue à même d'accueillir et de retenir la deuxième batterie amovible 4 de manière que cette deuxième batterie amovible 4 soit connectée électriquement au deuxième connecteur électrique 8.

Dans l'exemple représenté, le dispositif de verrouillage embarqué 13 présente la forme d'un cadenas, dont un organe mobile 20 est à même d'être verrouillé dans une position où il forme un obstacle sur la trajectoire des rayons de la roue arrière de la bicyclette électrique 1.

Sur la figure 1, la première batterie amovible 3 et la deuxième batterie amovible 4 sont l'une et l'autre déconnectées et dissociées de la bicyclette électrique 1, ce que permet leur caractère amovible.

Ainsi qu'on peut bien le voir à la figure 2, le dispositif de verrouillage embarqué 13 comporte un dispositif électronique de contrôle et de commande 21, qui commande un actionneur non représenté. Cet actionneur peut manoeuvrer l'organe mobile 20 lui-même ou seulement un pêne à même de retenir cet organe mobile 20 dans son état de verrouillage. Dans le cas où un tel pêne est prévu, un ressort rappelle l'organe mobile 20 vers une position où cet organe mobile 20 est escamoté, où le dispositif de verrouillage embarqué 13 est dans un état déverrouillé et où une utilisation de la bicyclette électrique 1 est possible.

Une liaison 22 permet une communication entre le dispositif électronique de pilotage 5 et le dispositif électronique de contrôle et de commande 21. Grâce à cette liaison 22, le dispositif électronique de contrôle et de commande 21 peut notamment indiquer au dispositif électronique de pilotage 5 si le dispositif de verrouillage embarqué 13 empêche ou n'empêche pas une utilisation de la bicyclette électrique 1.

Un émetteur-récepteur 23 à même d'établir une communication sans fil avec l'extérieur équipe également la bicyclette électrique 1. Dans l'exemple représenté, l'émetteur-récepteur 23 est prévu dans le dispositif de verrouillage embarqué 13, ce qui est avantageux sans être obligatoire. Une liaison 24 permet une communication entre l'émetteur-récepteur 23 et le dispositif électronique de contrôle et de commande 21, moyennant quoi ce dispositif électronique de contrôle et de commande 21 peut communiquer avec l'extérieur par l'intermédiaire de l'émetteur-récepteur 23.

Le moteur électrique 2 peut ou être passif, ou bien fonctionner en mode moteur pour entraîner une roue de la bicyclette, ou bien encore fonctionner en mode générateur pour se faire entraîner par cette roue et générer un courant électrique de recharge de l'une des première et deuxième batteries amovibles 3 et 4. Le dispositif électronique de pilotage 5 pilote le fonctionnement du moteur électrique 2 en fonction d'informations qu'il reçoit de capteurs non représentés, parmi lesquels il y a notamment un capteur de pédalage, un éventuel capteur de freinage et un éventuel tachymètre prévu pour mesurer la vitesse de la bicyclette électrique 1. Le capteur de pédalage est prévu pour détecter et/ou mesurer la force de pédalage d'un utilisateur sur les pédales de la bicyclette électrique 1. L'éventuel capteur de freinage est prévu pour détecter un actionnement des freins de la bicyclette électrique 1 par un utilisateur.

Un ou plusieurs capteurs non représentés sont également prévus pour permettre au dispositif électronique de pilotage 5 de connaître la tension appliquée au niveau du deuxième connecteur électrique 8. Le dispositif électronique de pilotage 5 compare cette tension à un seuil prédéterminé. Lorsque la tension appliquée au niveau du deuxième connecteur électrique 8 est inférieure au seuil prédéterminé, cela signifie que le moteur électrique 2 ne peut pas être alimenté par la deuxième batterie amovible 4, soit parce que cette deuxième batterie amovible 4 est absente, soit parce que son état de charge est insuffisant.

Lorsque le moteur électrique 2 est en mode moteur, le dispositif électronique de pilotage 5 vérifie régulièrement la tension appliquée au niveau du deuxième connecteur électrique 8, c'est-à-dire la possibilité d'alimenter le moteur électrique 2 à partir de la deuxième batterie amovible 4. Toujours lorsque le moteur électrique 2 est en mode moteur, le dispositif électronique de pilotage 5 commande que le moteur électrique 2 soit alimenté prioritairement par la deuxième batterie amovible 4 dès lors que la tension appliquée au niveau du deuxième connecteur électrique 8 est supérieure au seuil prédéterminé. Du fait de ce fonctionnement, la deuxième batterie 4 est utilisée souvent, tandis que la première batterie 3 est peu utilisée et ne doit que rarement être rechargée.

La bicyclette électrique 1 peut faire partie d'un parc de bicyclettes électriques 1 en libre-service. Dans ce cas, un utilisateur de ce parc peut être en possession de la deuxième batterie amovible 4. La deuxième batterie amovible 4 est suffisamment légère et peu volumineuse pour que, sans en être trop dérangé, l'utilisateur puisse la transporter avec lui, voire même sur lui, par exemple dans une poche, ou dans un sac à main, ou bien dans une seule main. Après chaque utilisation de la bicyclette électrique 1, l'utilisateur enlève la deuxième batterie amovible 4 de la bicyclette électrique 1, emporte cette deuxième batterie amovible 4 et peut la mettre en charge, par exemple chez lui.

Toujours dans le cas où la bicyclette électrique 1 fait partie d'un parc de bicyclettes électriques 1 en libre-service, il est possible que seul l'exploitant gérant le parc de bicyclettes électriques 1 possède la clé permettant d'actionner la serrure 16 et que lui seul s'occupe de la recharge de la première batterie amovible 3.

Par exemple au moyen d'une tarification appropriée concernant l'utilisation des bicyclettes électriques 1 en libre-service, l'utilisateur est incité à ne pas utiliser l'entraînement électrique ou à connecter la deuxième batterie amovible 4 suffisamment chargée, sur la bicyclette électrique 1, lorsqu'il utilise celle-ci. De la sorte, la première batterie amovible 3 est peu utilisée et elle ne doit pas être rechargée fréquemment par l'exploitant du parc de bicyclettes électriques 1 en libre-service.

La présence de la première batterie amovible 3 chargée sur la bicyclette électrique 1 offre, à tout utilisateur, la possibilité d'un entraînement électrique de cette bicyclette électrique 1 sur un long trajet. En outre, un utilisateur ne disposant pas d'un exemplaire de la première batterie amovible 3 peut employer l'entraînement électrique de la bicyclette électrique 1, grâce à la présence de la première batterie amovible 3 rechargée sur la bicyclette électrique 1.

Le parc de bicyclettes électriques 1 en libre-service comporte plusieurs stations de prise et de dépose des bicyclettes électriques 1. Ces stations sont réparties géographiquement, par exemple au sein d'une ville ou d'une agglomération urbaine, et sont gérées ensemble par un système pouvant être comme celui décrit dans la demande de brevet européen EP 2 437 222. Chaque station est pourvue d'une borne B (figure 2) comprenant des moyens de communication courte distance, avec lesquels l'émetteur-récepteur 23 peut établir une communication sans fil et sans contact.

Via l'émetteur-récepteur 23, le dispositif électronique de pilotage communique avec la borne B et transmet ainsi à l'exploitant des données relatives à l'utilisation de la première batterie amovible 3. En particulier, il est indiqué à l'exploitant si, au cours d'une utilisation de la bicyclette électrique 1, la première batterie amovible 3 a été ou non utilisée, ce qui sera pris en compte pour décider de la facturation ou de la non facturation de cette utilisation à l'utilisateur et pour décider du montant de cette facturation, le cas échéant. Via l'émetteur-récepteur 23, le dispositif électronique de pilotage 5 communique avec la borne B également pour transmettre à l'exploitant le niveau de charge de la première batterie amovible 3. Lorsque la charge de la première batterie amovible 3 en place sur la bicyclette électrique 1 est passée en dessous d'un niveau de charge prédéfini, l'exploitant vient remplacer cette première batterie amovible 3 par un exemplaire rechargé de la première batterie amovible 3, à la station munie de la borne B, dans le cadre de ses opérations d'entretien du parc de bicyclettes électriques 1.

Le dispositif de verrouillage embarqué 13 peut être semblable au dispositif de verrouillage décrit dans la demande de brevet européen EP 2 437 222 susmentionné. Via l'émetteur-récepteur 23, le dispositif électronique de contrôle et de commande 21 peut communiquer à la fois avec la borne B et avec un téléphone portable de l'utilisateur. Cette borne B peut ainsi recevoir des informations sur l'identité de l'utilisateur et émettre une autorisation ou une interdiction d'utiliser la bicyclette électrique 1, à destination du dispositif électronique de contrôle et de commande 21. Ce dispositif électronique de contrôle et de commande 21 peut également déduire l'identité d'un utilisateur en communiquant avec une carte sans contact ou carte de radio-identification détenue par cet utilisateur.

S'il reçoit une autorisation de libérer la bicyclette électrique 1, le dispositif électronique de contrôle et de commande 21 commande au dispositif de verrouillage embarqué 13 de passer de son état verrouillé, dans lequel une utilisation de la bicyclette électrique est empêchée, à son état déverrouillé, dans lequel une utilisation de la bicyclette électrique est possible. Une fois que le dispositif de verrouillage embarqué 13 est dans son état déverrouillé, le dispositif électronique de contrôle et de commande 21 indique au dispositif électronique de pilotage 5 qu'il est autorisé à faire entraîner électriquement la bicyclette électrique 1, par le moteur électrique 2. Une fois qu'il en a reçu l'autorisation de la part du dispositif électronique de contrôle et de commande 21, le dispositif électronique de pilotage 5 n'alimente effectivement le moteur électrique 2 électriquement que si la deuxième batterie amovible 4 est connectée électriquement à la bicyclette électrique 1 ou si, par exemple en pressant sur un bouton 26 équipant le dispositif de verrouillage embarqué 13, l'utilisateur a communiqué l'ordre d'alimenter le moteur électrique 2 à partir de la première batterie amovible 3.

L'infrastructure associée au parc de bicyclettes électriques 1 en libre-service peut être très simple et être implantée à faible coût. En particulier, chaque station de prise et de dépose des bicyclettes électriques 1 peut ne pas être équipée de piliers d'accueil équipés d'un système de verrouillage d'une bicyclette, de moyens pour communiquer par contact avec la bicyclette, et de moyens de connexion électrique pour le rechargement de la batterie de cette bicyclette, comme c'est le cas dans les installations de l'état de la technique. Le fait que la borne B communique sans contact avec le dispositif électronique de contrôle et de commande 21 et avec le dispositif électronique de pilotage 5, via l'émetteur-récepteur 23, et le fait que les première et deuxième batteries amovibles 3 et 4 peuvent être retirées de la bicyclette électrique 1 pour leur rechargement permettent que, au niveau des stations de prise et de dépose des bicyclettes électriques 1, chaque bicyclette électrique 1 soit posée sur une structure de rangement de bicyclettes de type standard, voire même sur la béquille de la bicyclette électrique 1. Une structure de rangement de type standard peut être, par exemple, un support définissant des fourches dans chacune desquelles on peut engager la roue avant d'une bicyclette. Une fois que les bornes B et l'infrastructure informatique sont en place, il est très aisé de modifier le nombre de bicyclettes électriques 1 en circulation, ainsi que la taille des stations de prise et de dépose de ces bicyclettes électriques 1.

## Revendications

1. Bicyclette électrique, comprenant un moteur électrique (2) d'entraînement de la bicyclette électrique, une première batterie amovible (3) d'alimentation du moteur électrique (2), ainsi qu'au moins une deuxième batterie amovible (4) d'alimentation du moteur électrique (2), la première et la deuxième batterie amovibles (3, 4) pouvant équiper en même temps la bicyclette électrique de manière à être l'une et l'autre connectées électriquement à la bicyclette électrique et à pouvoir l'une et l'autre alimenter le moteur électrique (2), **caractérisée en ce que** la deuxième batterie amovible (4) a une capacité de stockage d'énergie moindre que la première batterie amovible (3), la bicyclette électrique comprenant un dispositif de commutation (9) à même d'effectuer une commutation entre un état où le moteur électrique (2) est alimenté par la première batterie amovible (3) et un état où le moteur électrique (2) est alimenté par la deuxième batterie amovible (4), la bicyclette électrique comprenant en outre un dispositif électronique de pilotage (5) qui est un dispositif électronique de pilotage de l'alimentation électrique du moteur électrique (2) et qui est configuré pour vérifier régulièrement la possibilité d'alimenter le moteur électrique (2) à partir de la deuxième batterie amovible (4) et pour commander que le moteur électrique (2) soit alimenté prioritairement par la deuxième batterie amovible (4) dès lors que cette deuxième batterie amovible (4) est connectée électriquement à la bicyclette électrique et présente un état de charge supérieur à un seuil prédéterminé.

2. Bicyclette électrique selon la revendication précédente, **caractérisée en ce que** la deuxième batterie amovible (4) est moins lourde et moins encombrante que la première batterie amovible (3).

3. Bicyclette électrique selon l'une quelconque des revendications précédentes, **caractérisée en ce qu'**elle comporte un dispositif de verrouillage embarqué (13) à même d'occuper au moins deux états, à savoir un état verrouillé dans lequel une utilisation de la bicyclette électrique est empêchée et un état déverrouillé dans lequel une utilisation de la bicyclette électrique est possible, ce dispositif de verrouillage embarqué (13) comportant un dispositif électronique de contrôle et de commande (21) à même au moins de commander de passer de l'état verrouillé à l'état déverrouillé.

4. Bicyclette électrique selon la revendication 3, **caractérisée en ce qu'**elle comporte une liaison (22) permettant une communication entre le dispositif électronique de pilotage (5) de l'alimentation électrique du moteur électrique (2) et le dispositif électronique de contrôle et de commande (21) constitutif du dispositif de verrouillage embarqué (13).

5. Bicyclette électrique selon la revendication 4, **caractérisé en ce que** le dispositif électronique de pilotage (5) de l'alimentation électrique du moteur est configuré pour n'alimenter le moteur électrique (2) que si au moins une condition est remplie, cette condition étant que le dispositif électronique de contrôle et de commande (21) indique que le dispositif de verrouillage embarqué (13) n'empêche pas une utilisation de la bicyclette électrique.

6. Bicyclette électrique selon la revendication 5, **caractérisé en ce que** ladite condition est une première condition, le dispositif électronique de pilotage (5) de l'alimentation électrique du moteur électrique (2) étant configuré pour n'alimenter le moteur électrique (2) que si la première condition et au moins l'une de deuxième et troisième conditions sont remplies en même temps, la deuxième condition étant que la deuxième batterie amovible (4) est connectée électriquement à la bicyclette électrique, la troisième condition étant qu'un utilisateur a communiqué l'ordre d'alimenter le moteur électrique (2) à partir de la première batterie amovible (3).

7. Bicyclette électrique selon l'une quelconque des revendications 3 à 6, **caractérisée en ce qu'**elle comporte un émetteur-récepteur (23) à même d'établir une communication sans fil avec l'extérieur, ainsi qu'une liaison (24) permettant une communication entre cet émetteur-récepteur (23) et le dispositif électronique de contrôle et de commande (21) constitutif du dispositif de verrouillage embarqué (13).

8. Bicyclette électrique selon l'une quelconque des revendications précédentes, **caractérisée en ce qu'**elle comprend un premier connecteur électrique (7) de connexion de la première batterie amovible (3) et un deuxième connecteur électrique (8) de connexion de la deuxième batterie amovible (4), ces premier et deuxième connecteurs électriques (7, 8) étant raccordés électriquement au dispositif de commutation (9).

9. Bicyclette électrique selon l'une quelconque des revendications précédentes, **caractérisée en ce qu'**elle comprend un premier et un deuxième dispositif de retenue d'une batterie amovible, le premier dispositif de retenue (14, 15) étant à même d'accueillir et de retenir la première batterie amovible (3) de manière que cette première batterie amovible (3) soit connectée électriquement à la bicyclette électrique tout en étant amovible, le deuxième dispositif de retenue (8, 18) étant à même d'accueillir et de retenir la deuxième batterie amovible (4) de manière que cette deuxième batterie amovible (4) soit connectée électriquement à la bicyclette électrique tout en étant amovible.

10. Bicyclette électrique selon la revendication 9, **caractérisée en ce qu'**elle comprend un dispositif antivol (15) prévu pour verrouiller la première batterie dans le premier dispositif de retenue, ce dispositif antivol (15) nécessitant une clé pour être déverrouillé de manière à permettre que la première batterie amovible (3) soit retirée de la bicyclette électrique.

11. Bicyclette électrique selon l'une quelconque des revendications 9 et 10, **caractérisée en ce que** le premier dispositif de retenue (14, 15) est à même d'accueillir et de retenir une batterie plus volumineuse que le deuxième dispositif de retenue (8, 18).

12. Bicyclette électrique selon l'une quelconque des revendications précédentes, **caractérisée en ce qu'**elle est dépourvue de moyens permettant le raccordement électrique de l'une au moins des première et deuxième batteries amovibles (3, 4) à une source extérieure d'énergie électrique lorsque ces première et deuxième batteries (3, 4) sont connectées électriquement à la bicyclette électrique.

13. Procédé d'alimentation électrique du moteur électrique (2) d'une bicyclette électrique (1) comprenant un moteur électrique (2) d'entraînement de la bicyclette électrique, une première batterie amovible (3) d'alimentation du moteur électrique (2), ainsi qu'au moins une deuxième batterie amovible (4) d'alimentation du moteur électrique (2), cette deuxième batterie amovible (4) ayant une capacité de stockage d'énergie moindre que la première batterie amovible (3), la première et la deuxième batterie amovibles (4) pouvant équiper en même temps la bicyclette électrique de manière à être l'une et l'autre connectées électriquement à la bicyclette électrique et à pouvoir l'une et l'autre alimenter le moteur électrique (2), la bicyclette électrique comprenant un dispositif de commutation (9) à même d'effectuer une commutation entre un état où le moteur électrique (2) est alimenté par la première batterie amovible (3) et un état où le moteur électrique (2) est alimenté par la deuxième batterie amovible (4), le procédé d'alimentation électrique étant un procédé dans lequel la possibilité d'alimenter le moteur électrique (2) à partir de la deuxième batterie amovible (4) est vérifiée régulièrement et dans lequel le moteur électrique (2) est alimenté prioritairement par la deuxième batterie amovible (4) dès lors que cette deuxième batterie amovible (4) est connectée électriquement à la bicyclette électrique et présente un état de charge supérieur à un seuil prédéterminé.

14. Procédé d'alimentation électrique selon la revendication 13, dans lequel la bicyclette électrique (1) est selon l'une quelconque des revendications 1 à 12.

## Patentansprüche

1. Elektrofahrrad, umfassend einen elektrischen Motor (2) zum Antreiben des Elektrofahrrads, eine erste entfernbare Batterie (3) zum Versorgen des elektrischen Motors (2), sowie mindestens eine zweite entfernbare Batterie (4) zum Versorgen des elektrischen Motors (2), wobei die erste und die zweite entfernbare Batterie das Elektrofahrrad gleichzeitig ausrüsten können, so dass beide elektrisch mit dem Elektrofahrrad verbunden und beide den elektrischen Motor (2) versorgen können, **dadurch gekennzeichnet, dass** die zweite entfernbare Batterie (4) eine niedrigere Energiespeicherkapazität als die erste entferne Batterie (3) hat, wobei das Elektrofahrrad eine Schalteinrichtung (9) aufweist, um zwischen einem Zustand, in dem der elektrische Motor (2) von der ersten entfernbaren Batterie (3) versorgt wird und einem Zustand, in dem der elektrische Motor (2) von der zweiten entfernbaren Batterie (4) versorgt wird, schalten zu können, wobei das Elektrofahrrad eine elektronische Steuereinrichtung (5) umfasst, welche eine elektrische Einrichtung zum Steuern der elektrischen Versorgung des elektrischen Motors (2) ist und welche eingerichtet ist, um regelmässig die Möglichkeit zu verifizieren, den elektrischen Motor (2) mittels der zweiten entfernbaren Batterie (4) zu versorgen und um anzuweisen, dass der elektrische Motor (2) zuerst mittels der zweiten entfernbaren Batterie (4) versorgt wird, wenn die zweite entfernbare Batterie (4) elektrisch mit dem Elektrofahrrad verbunden ist und einen Ladezustand hat, welcher grösser ist als ein vorbestimmter Grenzwert ist.

2. Elektrofahrrad nach dem vorhergehenden Anspruch, **dadurch gekennzeichnet, dass** die zweite entfernbare Batterie (4) weniger schwer und weniger voluminös ist wie die erste entfernbare Batterie (3).

3. Elektrofahrrad nach einem der vorhergehenden Ansprüche, **dadurch gekennzeichnet, dass** es eine installierte Verschlussvorrichtung (13) aufweist, welche in mindestens zwei Zuständen vorliegen kann, d.h. in einem verschlossenen Zustand, in dem Benutzen des Elektrofahrrads verhindert ist und einem unverschlossenen Zustand, in dem Benutzen des Elektrofahrrads möglich ist, wobei die installierte Verschlussvorrichtung (13) eine elektronische Steuer- und Befehlseinrichtung (21) umfasst, welche zumindest Umschalten von dem verschlossenen in den unverschlossenen Zustand befiehlt.

4. Elektrofahrrad nach Anspruch 3, **dadurch gekennzeichnet, dass** es eine Verbindung (22) umfasst, welche Kommunikation zwischen der elektronischen Steuereinrichtung (5) zum elektrischen Versorgen des elektrischen Motors (2) und der elektronischen Steuer- und Befehlsvorrichtung (21) ermöglicht, welche Teil der installierten Verschlussvorrichtung (13) ist.

5. Elektrofahrrad nach Anspruch 4, **dadurch gekennzeichnet, dass** die elektronische Steuereinrichtung (5) zum elektrischen Versorgen des Motors eingerichtet ist, um den elektrischen Motor (2) nur dann zu versorgen, wenn mindestens eine Bedingung erfüllt ist, wobei die Bedingung ist, dass die elektronische Steuer- und Befehlseinrichtung (21) anzeigt, dass die installierte Verschlussvorrichtung (13) nicht die Nutzung des Elektrofahrrads verhindert.

6. Elektrofahrrad nach Anspruch 5, **dadurch gekennzeichnet, dass** die Bedingung eine erste Bedingung ist, wobei die elektronische Steuereinrichtung (5) zum elektrischen Versorgen des elektrischen Motors (2) eingerichtet ist, um den elektrischen Motor (2) nur dann zu versorgen, wenn die erste Bedingung und mindestens eine einer zweiten und einer dritten Bedingung gleichzeitig erfüllt ist, wobei die zweite Bedingung diejenige ist, dass die zweite entfernbare Batterie (4) elektrisch mit dem Elektrofahrrad verbunden ist, und die dritte Bedingung diejenige ist, dass ein Benutzer den Befehl kommuniziert hat, den elektrischen Motor (2) mittels der ersten entfernbaren Batterie (3) zu versorgen.

7. Elektrofahrrad nach einem der Ansprüche 3 bis 6, **dadurch gekennzeichnet, dass** es einen Empfänger (23) umfasst, welcher zum Etablieren drahtloser Kommunikation zwischen dem Empfänger (23) und der elektronischen Steuer- und Befehlseinrichtung (21) eingerichtet ist, welche Teil der installierten Verschlussvorrichtung (13) ist.

8. Elektrofahrrad nach einem der vorhergehenden Ansprüche, **dadurch gekennzeichnet, dass** es einen ersten elektrischen Anschluss (7) zum Verbinden der ersten entfernbaren Batterie (3) und einen zweiten elektrischen Anschluss (8) zum Verbinden der zweiten entfernbaren Batterie (4) umfasst, wobei erste und zweite Anschlüsse (7, 8) elektrisch mit der Schalteinrichtung (9) verbunden sind.

9. Elektrofahrrad nach einem der vorhergehenden Ansprüche, **dadurch gekennzeichnet, dass** es eine erste und eine zweite Haltevorrichtung für eine entfernbare Batterie umfasst, wobei die erste Haltevorrichtung (14, 15) eingerichtet ist, um die erste entfernbare Batterie (3) aufzunehmen und zu halten, so dass die erste entfernbare Batterie (3) elektrisch mit dem Elektrofahrrad solange verbunden ist, bis sie entfernt wird, wobei die zweite Haltevorrichtung (8, 18) eingerichtet ist, um die zweite entfernbare Batterie (4) aufzunehmen und zu halten, so dass die zweite entfernbare Batterie (4) elektrisch mit dem Elektrofahrrad solange verbunden ist, bis sie entfernt wird.

10. Elektrofahrrad nach Anspruch 9, **dadurch gekennzeichnet, dass** es eine Diebstahlsicherung (15) umfasst, welche eingerichtet ist, um die erste Batterie in der ersten Haltevorrichtung zu verschliessen, wobei für die Diebstahlsicherung (15) ein Schlüssel erforderlich ist, um aufgeschlossen zu werden, so dass es möglich ist, die erste entfernbare Batterie (3) von dem Elektrofahrrad zu entfernen.

11. Elektrofahrrad nach einem der Ansprüche 9 und 10, **dadurch gekennzeichnet, dass** die erste Haltevorrichtung (14, 15) eingerichtet ist, um eine Batterie eines grösseren Volumens aufzunehmen und zu halten als die zweite Haltevorrichtung (8, 18).

12. Elektrofahrrad nach einem der vorhergehenden Ansprüche, **dadurch gekennzeichnet, dass** ohne Mittel die elektrische Verbindung von mindestens eine der ersten und zweiten entfernbaren Batterien (3, 4) an eine äussere elektrische Energiequelle möglich ist, wenn die erste und zweite Batterien (3, 4) elektrisch mit dem Elektrofahrrad verbunden sind.

13. Verfahren zur elektrischen Versorgung des elektrischen Motors (2) eines Elektrofahrrads (1), umfassend einen elektrischen Motor (2) zum Betreiben des Elektrofahrrads, eine erste entfernbare Batterie (3) zum Versorgen des elektrischen Motors (2), sowie mindestens eine zweite entfernbare Batterie (4) zum Versorgen des elektrischen Motors (2), wobei die zweite entfernbare Batterie (4) eine niedrigere Energiespeicherkapazität als die erste entfernbare Batterie (3) hat, wobei die erste und die zweite entfernbaren Batterien (4) das Elektrofahrrad gleichzeitig ausstatten können, so dass beide elektrisch mit dem Elektrofahrrad verbunden sind und beide den elektrischen Motor (2) versorgen können, wobei das Elektrofahrrad eine Schalteinrichtung (9) umfasst, welche zwischen einem Zustand schaltet, in dem der elektrische Motor (2) von der ersten entfernbaren Batterie (3) versorgt wird und einem Zustand, in dem der elektrische Motor (2) von der zweiten entfernbaren Batterie (4) versorgt wird, wobei das elektrische Versorgungsverfahren ein Verfahren ist, in dem die Möglichkeit zum Versorgen des elektrischen Motors (2) von der zweiten entfernbaren Batterie (4) regelmässig verifiziert wird und in dem der elektrische Motor (2) zuerst von der zweiten entfernbaren Batterie (4) versorgt wird, wenn die zweite entfernbare Batterie (4) elektrisch mit dem Elektrofahrrad verbunden ist und einen Ladezustand hat, welcher grösser ist als ein vorbestimmter Grenzwert.

14. Verfahren zur elektrischen Versorgung nach Anspruch 13, wobei das Elektrofahrrad (1) gemäss einem der Ansprüche 1 bis 12 ist.

## Claims

1. Electric bicycle, comprising an electric motor (2) to drive the electric bicycle, a first removable battery (3) for supplying the electric motor (2), as well as at least one second removable battery (4) for supplying the electric motor (2), the first and the second removable batteries (3, 4) being able to equip the electric bicycle at the same time in such a way as to both be connected electrically to the electric bicycle and both able to supply the electric motor (2), **characterized in that** the second removable battery (4) has a lower energy storage capacity than the first removable battery (3), the electric bicycle comprising a switching device (9) able to switch between a state where the electric motor (2) is supplied by the first removable battery (3) and a state where the electric motor (2) is supplied by the second removable battery (4), the electric bicycle further comprising an electronic control device (5) which is an electronic device for controlling the electrical supply of the electric motor (2) and which is configured to verify regularly the possibility of supplying the electric motor (2) from the second removable battery (4) and to command that the electric motor (2) is first supplied by the second removable battery (4) when this second removable battery (4) is connected electrically to the electric bicycle and has a state of charge greater than a predetermined threshold.

2. Electric bicycle according to the preceding claim, **characterized in that** the second removable battery (4) is less heavy and less bulky that the first removable battery (3).

3. Electric bicycle according to any one of the preceding claims, **characterized in that** it comprises an installed locking device (13) able to be in at least two states, namely a locked state in which use of the electric bicycle is prevented and an unlocked state in which use of the electric bicycle is possible, this installed locking device (13) comprising an electronic control and command device (21) able at least to command switching from the locked state to the unlocked state.

4. Electric bicycle according to claim 3, **characterized in that** it includes a link (22) permitting communication between the electronic control device (5) for electrical supply of the electric motor (2) and the electronic control and command device (21) which is part of the installed locking device (13).

5. Electric bicycle according to claim 4, **characterized in that** the electronic control device (5) for electrical supply of the motor is configured to supply the electric motor (2) only if at least one condition is fulfilled, this condition being that the electronic control and command device (21) indicates that the installed locking device (13) does not prevent use of the electric bicycle.

6. Electric bicycle according to claim 5, **characterized in that** the said condition is a first condition, the electronic control device (5) for electrical supply of the electric motor (2) being configured so as to supply the electric motor (2) only if the first condition and at least one of second and third conditions are fulfilled at the same time, the second condition being that the second removable battery (4) is connected electrically to the electric bicycle, the third condition being that a user has communicated the command to supply the electric motor (2) from the first removable battery (3).

7. Electric bicycle according to any one of the claims 3 to 6, **characterized in that** it comprises a transceiver (23) able to establish wireless communication with the outside, as well as a link (24) allowing communication between this transceiver (23) and the electronic control and command device (21) which is part of the installed locking device (13).

8. Electric bicycle according to any one of the preceding claims, **characterized in that** it comprises a first electrical connector (7) for connecting the first removable battery (3) and a second electrical connector (8) for connecting the second removable battery (4), these first and second electrical connectors (7, 8) being electrically connected to the switching device (9).

9. Electric bicycle according to any one of the preceding claims, **characterized in that** it comprises a first and a second holding device for a removable battery, the first holding device (14, 15) being able to receive and hold the first removable battery (3) in such a way that this first removable battery (3) is connected electrically to the electric bicycle all the while being removable, the second holding device (8, 18) being able to receive and hold the second removable battery (4) in such a way that this second removable battery (4) is electrically connected to the electrical bicycle all the while being removable.

10. Electric bicycle according to claim 9, **characterized in that** it comprises an anti-theft device (15) provided to lock the first battery in the first holding device, this anti-theft device (15) requiring a key to be unlocked in such a way as to allow the first removable battery (3) to be removed from the electric bicycle.

11. Electric bicycle according to any one of the claims 9 and 10, **characterized in that** the first holding device (14, 15) is able to receive and hold a battery of larger volume than the second holding device (8, 18).

12. Electric bicycle according to any one of the preceding claims, **characterized in that** it is without means permitting the electrical connection of at least one of the first and second removable batteries (3, 4) to an outside electrical energy source when these first and second batteries (3, 4) are electrically connected to the electric bicycle.

13. Method for electrical supply of the electric motor (2) of an electric bicycle (1) comprising an electric motor (2) to drive the electric bicycle, a first removable battery (3) for supplying the electric motor (2), as well as at least one second removable battery (4) for supplying the electric motor (2), this second removable battery (4) having a lower energy storage capacity than the first removable battery (3), the first and the second removable batteries (4) <sic. (3, 4) being able to equip the electric bicycle at the same time in such a way as to both be connected electrically to the electric bicycle and both able to supply the electric motor (2), the electric bicycle comprising a switching device (9) able to switch between a state where the electric motor (2) is supplied by the first removable battery (3) and a state where the electric motor (2) is supplied by the second removable battery (4), the electrical supply method being a method in which the possibility to supply the electric motor (2) from the second removable battery (4) is regularly verified and in which the electric motor (2) is supplied first by the second removable battery (4) when this second removable battery (4) is electrically connected to the electric bicycle and has a state of charge greater than a predetermined threshold.

14. Electrical supply method according to claim 13, wherein the electric bicycle (1) is according to anyone of the claims 1 to 12.
